# EUROPEAN PATENT SPECIFICATION

(11) **EP 3 470 009 B1**
(45) Date of publication and mention of the grant of the patent: **05.05.2021**
(21) Application number: 17810471.7
(22) Date of filing: 26.04.2017
(51) Int. Cl.: A61C 7/28, A61C 7/14, A61C 7/16

(54) **SELF-LIGATION TYPE DENTITION-CORRECTING BRACKET ASSEMBLY**
ZAHNKORREKTURKLAMMERANORDNUNG MIT SELBSTLIGATUR
ENSEMBLE D'APPAREIL DE CORRECTION DENTAIRE DE TYPE À AUTO-LIGATURE

(30) Priority: 10.06.2016 KR 20160072163
(43) Date of publication of application: 17.04.2019
(73) Proprietor: Biocetec Co., Ltd., Seongbuk-gu, Seoul 02792 (KR); Oh, Yoon Joon, Osan-si, Gyeonggi-do 18107 (KR)
(72) Inventor: OH, Yoon Joon, Osan-si Gyeonggi-do 18107 (KR); YOON, Sung Hee, Seoul 06649 (KR)
(74) Representative: Nederlandsch Octrooibureau
(86) International application number: PCT/KR2017/004415
(87) International publication number: WO 2017/213348

(56) References cited:
- WO-A1-2010/019768
- KR-A- 20100 022 122
- KR-A- 20150 111 648
- US-A- 5 358 402
- US-A1- 2016 095 675

## Description

### Technical Field

The present invention relates to an orthodontic bracket assembly, more particularly to a self-ligating orthodontic bracket assembly having a simplified operating mechanism for the orthodontic archwire ligation slide to greatly improve the efficiency and stability of orthodontic treatments and procedures and increase economic viability.

### Background Art

Orthodontic correction is for correcting irregularities in teeth alignment such as in the case of malocclusion, etc. Orthodontic correction may commonly employ dental braces, a type of mechanical assistance device.

In recent times, various forms and types of dental braces have been developed and are being used in orthodontic procedures. Among the various types, the fixed type dental braces are braces in which an archwire is connected to the slots of brackets, which are attached to the surfaces of the teeth, to provide correction by pulling or pushing the teeth.

The fixed type dental braces provide the advantage of convenience for the practitioner in that the brackets are mounted onto the smooth outer surfaces of the teeth. However, securing the wire onto the brackets require a task of tying the securing member, such as an elastic O-ring, bolt, or clip, etc., onto the brackets individually. Not only does this require large amounts of time and effort on the part of the practitioner, but also the patient may frequently experience pain.

To resolve such drawbacks of the fixed type dental braces, the self-ligation type bracket is being used, for which the wire can be secured with a so -called one-touch method. Examples can be found in Korean Registered Patents No. 10-1541126, No. 10- 1506343, etc.

For example, a self-ligating orthodontic bracket assembly enables an easy securing and mounting of a clip or cap in the form of a snap-on fastener or an operation member in the form of a plate or lid, for example, with a one-touch manipulation without requiring a winding or tightening of a wire. Accordingly, as the securing member such as an elastic O-ring, bolt, or clip, etc., for securing the wire is omitted, the friction between the teeth can be reduced, so that the correction period may be relatively shorter, and the patient may experience less pain and discomfort.

However, in the case of a conventional self-ligating orthodontic bracket assembly, the outward size is very small, whereas the operation member for binding the wire has a very complicated structure. As the assembly is thus not easy to manufacture with high precision, the manufacturing costs are high, while the workability and durability are relatively low
US2016095675 discloses an orthodontic bracket which includes a base member defining an archwire slot having an opening, and at least one projection extending outwardly from the base member; a ligating slide moveable between a first position which is clear of the archwire slot, and second position where the ligating slide projects over the opening of the archwire slot; and a biasing member home by the ligating slide, and resiliently cooperating with the projection, and wherein the biasing member has a first portion which receives the projection when the ligating slide is in the first position, and a second portion which receives the projection when the ligating slide is in the second position.

### Disclosure

### Technical Problem

The present invention, which has been conceived to address and mitigate the problems described above, carries the objective of providing a self-ligating orthodontic bracket assembly having a simplified operating mechanism for the ligating slide of the orthodontic archwire to allow easy manipulation and convenient handling, enable manufacture at an economically viable cost, improve the efficiency of treatments and procedures, and increase stability by eliminating pain during the treatments and procedures.

### Technical Solution

The invention is as defined in the appended claims.

To achieve the objective above, an aspect of the present invention provides a self-ligating orthodontic bracket assembly that includes: a bracket body having an attachment surface, which is configured to be adhered to a tooth surface, and a slot, which has an open form to enable the placement of a wire along the direction of teeth alignment; a ligation slide installed movably on the bracket body to enable a selective opening/closing operation of the slot; and a binding part for restraining the ligation slide to prevent the ligation slide from becoming detached from the bracket body, where the binding part comprises a pin member, which is provided on the bracket body to be arranged in a movement zone of the ligation slide, and a retainer, which is provided on the ligation slide in a manner enabling a complementary fastening/detaching action with the pin member, and where the ligating and releasing operation is selectively achieved for the wire inserted in the slot by the complementary fastening/detaching action of the retainer and the pin member according to a movement of the ligation slide.

In a self-ligating orthodontic bracket assembly having the features described above according to an aspect of the present invention, the bracket body can include a base, which may have the shape of a flat block such that the attachment surface configured to be adhered to a tooth surface forms a lower surface, and a first upper body and a second upper body, which may each be provided on the base in the shape of a protruding block such that the first upper body and the second upper body are divided into two sides with the slot positioned in-between, while the slot can expose a portion of an upper surface of the base to form a bottom surface and can be surrounded by the first upper body and the second upper body such that opposing wall surfaces of the first upper body and the second upper body form inner walls, whereby the slot can form a trough that is open at the upper portion and at both ends to enable a coupling of the bracket body to a tooth by inserting and placing an archwire in the trough.

The base can have an adhesive and a multiple number of protrusions provided on the lower surface forming the attachment surface that is to be adhered to the tooth surface, where the multiple protrusions can be arranged in a particular pattern to increase bonding strength by increasing the contact area.

The protrusions can be formed in an undercut shape to restrain the adhesive filled around the protrusions and prevent the adhesive from readily being removed.

In the first upper body of the bracket body, a tool receptacle can be provided, which can be processed to a particular depth at an upper end of a wall surface forming an inner wall of the slot to form a recessed indentation shaped as a tab.

In the second upper body of the bracket body, a slide part and a pair of guide parts can be formed, the slide part formed in a "U" shape to form a pathway for receiving the ligation slide in a movable manner, and the pair of guide parts facing each other and protruding to form side walls on both sides of the slide part.

Also, the pair of guide parts can have guide rails provided in the lower end portions of the inner walls, with the guide rails arranged in parallel and processed in a groove shape to expand the slide part, and the slide part can have a through-hole formed therein penetrating through the base and the second upper body, while the pin member forming a component of the binding means can be installed such that its upper end portion protrudes up to a particular height above the bottom surface of the slide part when the pin member is inserted into the through-hole.

According to an aspect of the present invention, the first upper body and the second upper body of the bracket body can have placement indentations formed concavely in a groove shape along the perimeters of their lower end portions, which contact and form boundaries with an upper end portion of the base, so that a rubber ring or an elastic band can be placed in common in the placement indentations for binding onto the tooth.

The ligation slide can include a body, which may be complementarily joined with the slide part and received in a movable state, and a pair of sliding wings, which may protrude outward from both sides of a lower end portion of the body.

The sliding wings can be complementarily joined with guide rails provided respectively on the pair of guide parts that form side walls on both sides of the slide part of the bracket body, in a manner that permits movement by sliding.

Also, the ligation slide can be provided with a press -fit indentation that is formed in a lower surface of the body and is configured to support the retainer that is fitted into the press-fit indentation.

The retainer can be made with a flat spring element formed as a snap ring to enable the complementary fastening/detaching action while being elastically deformed by the pin member according to a movement of the ligation slide.

Also, the retainer can include a disk part, which may have a circular hole formed in a body made of a flat elastic piece, a pair of floating plates, which may protrude and extend from the disk part such that a slit hole continuing from an open one side of the circular hole forms the shape of a keyseat, and a pair of shock-absorbing elastic ribs, which may each be formed with an arced elongated hole formed as a recessed indentation connecting to the other side of the circular hole and with a vane protruding inward from the boundary portion between the circular hole and the arced elongated hole.

Also, the bracket body can be molded using any one material selected from nonmetal transparent materials and semitransparent materials. The pin member and the retainer can each be made of a metal material to be visible through the bracket body.

### Advantageous Effects

A self-ligating orthodontic bracket assembly according to an embodiment of the present invention can provide the following advantages.

Firstly, since the operation of the ligation slide for the orthodontic archwire can be manipulated by a one-touch method, handling of the assembly becomes easies and simpler, so that the efficiency and effectiveness of orthodontic treatments and procedures can be improved.

Secondly, since the operating mechanism of the ligation slide for the orthodontic archwire is simplified, the assembly can be manufactured in a cost effective manner and with high precision, so that the quality and reliability of orthodontic treatments and procedures can be improved.

Thirdly, as the operating mechanism of the ligation slide for the orthodontic archwire is simplified, the pain experienced during orthodontic treatments and procedures can be mitigated, and stability can be increased.

Fourthly, the structure employing an inserting of a reinforced core allows improved wear resistance and durability.

### Description of Drawings

FIG. 1 is an exploded perspective view of a self-ligating orthodontic bracket assembly according to an embodiment of the present invention.
FIG. 2 is a simplified plan view as seen from below, illustrating key elements from FIG. 1.
FIG. 3 is a simplified perspective view of a type of modified embodiment illustrating key elements from FIG. 1 and FIG. 2.

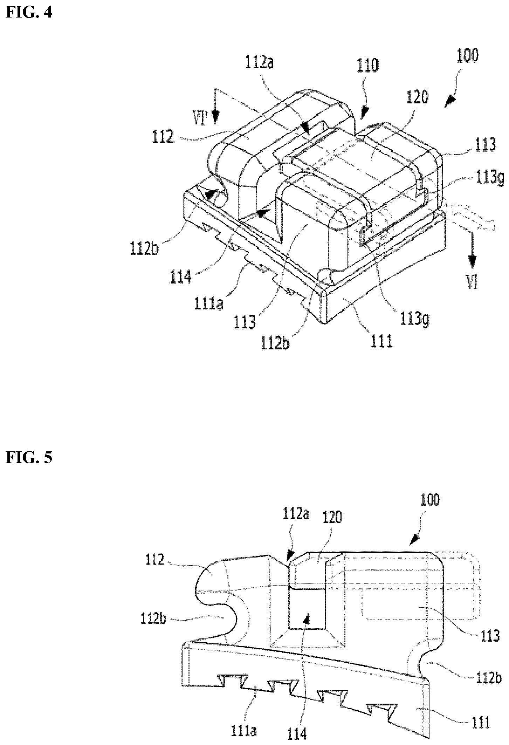

FIG. 4 is an assembled perspective view of a self-ligating orthodontic bracket assembly according to an embodiment of the present invention.
FIG. 5 is a side view of a self-ligating orthodontic bracket assembly according to an embodiment of the present invention.
FIG. 6 is a cross-sectional view across line VI-VI' of FIG. 4.
FIG. 7 is a plan view of a self-ligating orthodontic bracket assembly according to another embodiment of the present invention.
FIG. 8 is a bottom view of FIG. 7.

### Mode for Invention

A more detailed description is provided below, with reference to the accompanying drawings, of a self-ligating orthodontic bracket assembly according to certain embodiments of the present invention. The descriptions below and the accompanying drawings are merely presented as preferred embodiments and do not limit the self-ligating orthodontic bracket assembly of the present invention set forth in the scope of claims.

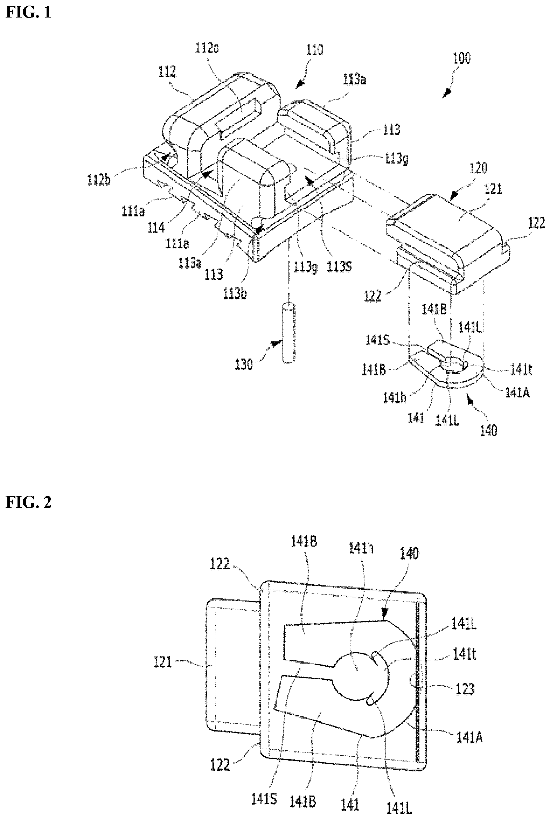

FIG. 1 is an exploded perspective view of a self-ligating orthodontic bracket assembly according to an embodiment of the present invention, and FIG. 2 is a simplified plan view as seen from below, illustrating key elements from FIG. 1.

Referring to FIG. 1 and FIG. 2, a self-ligating orthodontic bracket assembly 100 according to an embodiment of the present invention may include a bracket body 110, a ligation slide 120 installed onto the bracket body 110, and a binding part for restraining to prevent the ligation slide 120 from becoming detached from the bracket body 110.

The bracket body 110 may be provided with an attachment surface, which is to be adhered to a tooth surface, and a slot 114, which is open so as to enable the insertion of a coupling wire (not shown) along the teeth alignment direction. The ligation slide 120 may be installed movably in the bracket body 110 in a manner that allows a selective opening/closing operation of the slot 114.

The bracket body 110 may be provided with a base 111, which may be formed in the shape of a flat block with the attachment surface for adhering onto the tooth surface formed as the lower surface, as well as a first upper body 112 and a second upper body 113, which may be provided in the form of blocks protruding respectively from the base 111 with the slot 114 positioned in-between to be divided into two sides.

That is, the slot 114 may be formed in the shape of a concave trough, such as a groove or rail indentation, that is open at the upper portion and both ends. The slot 114 may be formed, as a portion of the upper surface of the base 111 is exposed to form the bottom surface, and as the first upper body 112 and second upper body surround the slot 114 and have the opposing wall surfaces of the first upper body 112 and second upper body 113 form the inner walls. An archwire (not shown) may be inserted and placed in the trough of the slot 114 to enable a coupling of the bracket body 110.

The base 111 may be provided with a multiple number of protrusions 111a on the lower surface, i.e. the lower surface forming the attachment surface that is to be adhered onto the tooth surface. The protrusions 111a may increase the contact area with the adhesive to increase the bonding strength. The protrusions 111a can be formed in an undercut shape, as illustrated in FIG. 1. This can prevent the adhesive, such as a resin, etc., from being easily removed, because the protrusions 111a restrain the adhesive applied around them.

In the first upper body 112, a tool receptacle 112a can be formed. The tool receptacle 112a may be processed to a particular depth in an upper end of the wall surface forming an inner wall of the slot 114 and may be formed as a recessed indent ation having the shape of a tab.

When the ligation slide 120 is in a closed state, closing off the open portion at the upper side of the slot 114, the front end portion of the ligation slide 120 may form a wall surface to block the open portion and may thus form a trough in the shape of a slimmer linear slot.

Therefore, while the archwire is inserted in the slot 114 and the ligation slide 120 in set in a closed state, if the archwire is to be released from the ligated state during an orthodontic procedure, the orthodontist may insert a tool or instrument into the tool receptacle 112a and provide a gentle rotation, so that the physical force pressing on and pushing the ligation slide 120 can readily cause the ligation slide 120 to retreat and cause the upper side of the slot 114 to be opened, thereby allowing an easy release of the archwire from the ligated state.

The second upper body 113 may include a slide part 113s, which forms a "U" shaped cavity to form a pathway in which the ligation slide 120 may be received in a movable manner, and a pair of guide parts 113a, which protrude facing each other to form walls on both sides of the slide part 113s.

In the lower end portions at the inner walls of the pair of guide parts 113a, guide rails 113g may be provided, which may be arranged in parallel and may be processed in the form of grooves to expand the slide part 113s.

In the slide part 113s, a through-hole may be provided, which may be formed penetrating through the base 111 and the second upper body 113, and a pin member 130 forming a component of the binding means may be inserted through the through-hole and installed such that the upper end portion protrudes to a particular height above the bottom surface of the slide part 113s.

In the first upper body 112 and the second upper body 113, respectively, placement indentations 112b, 113b may be provided, which may be formed concavely in the form of grooves in the perimeters of the lower end portions that are adjacent to and form boundaries with the upper end portion of the base 111. Into these placement indentations 112b, 113b, a rubber ring or an elastic band, etc., for example, may be installed and placed commonly for binding with the tooth.

A bracket body 110 having the composition described above can, for example, be molded into a colored or dyed mold or into a transparent or semitransparent mold via injection molding, etc., using a resin, plaster, or ceramic material.

The ligation slide 120 may include a body 121, which may be complementarily joined onto the "U" shaped slide part 113s provided in the second upper body 113 and which may take the form of a cover, lid, or door held in a movable state, and a pair of sliding wings 122, which may protrude outward from both sides of the lower end portion of the body 121.

The sliding wings 122 may be held in and complementarily joined to the guide rails 113g, which are provided respectively on the pair of guide parts 113a forming the side walls on both sides of the slide part 113s in the bracket body 110, with the slidin g wings 122 installed such as to be capable of movement by sliding.

According to an aspect of the present invention, the ligation slide 120 may be provided with a press-fit indentation 123, in which to fit and support the retainer 140, in a rear end portion on the lower surface of the body 121, and the rear end portion of the retainer 140 can be fitted in and joined to the press-fit indentation 123 such that the retainer 140 is in tight contact with the lower surface of the body 121.

According to another aspect of the present invention, the retainer 140 can be installed onto the lower surface of the body 121 of the ligation slide 120 for example by way of a fastening member such as a screw, etc., which is not shown in the drawings, in such a way that the retainer 140 is set in a tightly contacting state.

A ligation slide 120 having the composition described above can, for example, be molded into a colored or dyed mold or into a transparent or semitransparent mold via injection molding, etc., using a resin, plaster, or ceramic material.

The retainer 140 may, together with the pin member 130, form another component of the binding means and can be formed, for example, as a flat spring element in the form of a snap ring, to be installed in tight contact on the lower surface of the body 121 of the ligation slide 120, as illustrated in FIG. 2. Accordingly, the retainer 140 may form a binding means by performing a complementary fastening/detaching action with the pin member 130, which is installed in the bottom surface of the slide part 113s provided in the bracket body 110 and protruding to a particular height.

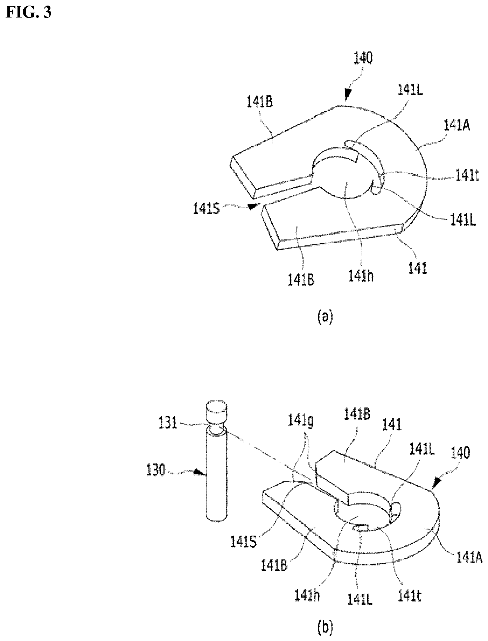

Referring to FIG. 2 and FIG. 3, the retainer 140 may include a disk part 141A, a pair of floating plates 141B, and a pair of shock-absorbing elastic ribs 141L.

The disk part 141A may be provided with a circular hole 141h formed in the center of a body 141 made of a flat elastic piece, the circular hole 141h formed to be capable of holding the pin member 130 placed therethrough. The pair of floating plates 141B may protrude extending from the disk part 141A such that a keyseat shape is formed by a slit hole 141s, which is formed from the opened one side of the circular hole 141h and which forms a pathway that may be stretched in width by the interference of the pin member 130. The pair of shock-absorbing elastic ribs 141L may be formed with arced elongated holes 141t that are formed as recessed indentations connecting from the other side of the circular hole 141h and vanes that protrude inward from the boundary portions between the circular hole 141h and the arced elongated holes 141t.

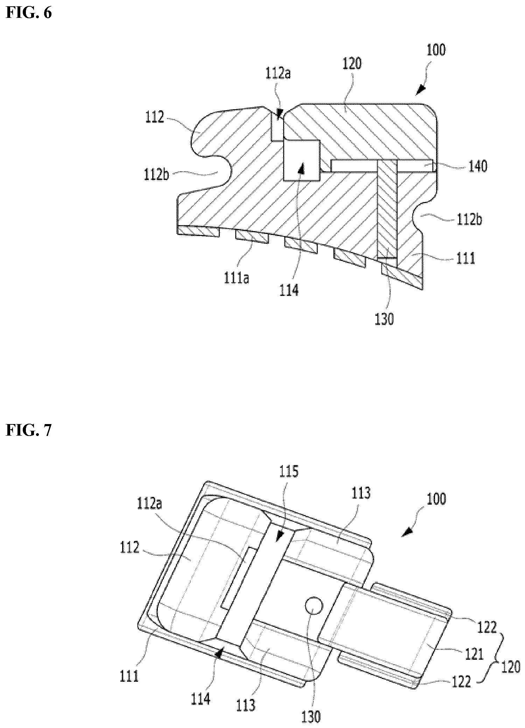

That is, as shown in the vertical cross-sectional view of FIG. 6, when the ligation slide 120 is moved for opening and closing the slot 114, the retainer 140 may move with the pin member 130 fitted in the slit hole 141s formed between the floating plates 141B of the retainer 140. Here, the disk part 141A may be elastically deformed such that the width of the slit hole 141s is increased by the interference of the pin member 130. Accordingly, by way of a fastening/detaching operation involving holding the pin member 130 in or removing the pin member 130 from the circular hole 141h of the disk part 141A, the ligation slide 120 can be made to selectively perform a ligating and releasing operation for the wire (not shown) inserted in the slot 114.

Simply put, the retainer 140 may made in the form of a flat spring element or snap ring having the general shape of an arch or a horseshoe, with a keyseat formed in the center of a body 141 made as a flat elastic piece, and may form a binding means for determining a bound state and a released state between the bracket body 110 and the ligation slide 120 by way of a complementary fastening/detaching action with the pin member 130, which may be installed to protrude up to a particular height in the bottom surface of the slide part 113s that is formed as a "U" shaped cavity in the second upper body 113 of the bracket body 110.

That is, with a self-ligating orthodontic bracket assembly 100 according to an embodiment of the invention, when the ligation slide 120 is moved for setting to a closed state in order to ligate the wire (not shown) inserted in the slot 114, as the pin member 130 is pushed to be inserted into and eventually placed in the circular hole 141h of the disk part 141A, the shock-absorbing elastic ribs 141L may be elastically deformed in the direction of the arced elongated holes 141t to serve and function as brakes. Accordingly, the impact that occurs when the ligation slide 120 is pushed closed for a ligating operation of the archwire can be absorbed naturally to be relieved or greatly alleviated.

Thus, a self-ligating orthodontic bracket assembly 100 according to an embodiment of the present invention can effectively relieve or completely eliminate the pain frequently experienced by the patient during an orthodontic correction using an existing conventional orthodontic bracket assembly.

A detailed description is provided below of the operational states of a self-ligating orthodontic bracket assembly 100 based on the present invention having the composition described above.

When performing an orthodontic treatment by using a self-ligating orthodontic bracket assembly 100 based on an embodiment of the present invention, the bracket body 110 may be set such that the attachment surface forming the lower surface of the base 111 is adhered to the tooth surface, and an archwire (not shown) may be inserted and placed in the slot 114 of the bracket body 110 along a teeth alignment direction.

When setting the bracket body 110 by adhering it to the tooth surface, the ligation slide 120 may be set in an open state, with the ligation slide 120 retreated such that the slot 114 is opened.

The setting procedures for attaching the bracket body 110 onto the tooth surface do not limit the present invention and can be performed in substantially the same manner as for typical orthodontic treatment procedures.

Next, in order to ligate the archwire (not shown) inserted in the slot 114, the orthodontist may use a tool or instrument to gently push the rear end portion of the ligation slide 120, to cause the ligation slide 120 to move forward along the "U" shaped slide part 113s provided in the second upper body 113 of the bracket body 110.

During the movement of the ligation slide 120, the pair of guide parts 113a, provided in the side walls on both sides of the slide part 113s, and the pair of sliding wings 122, protruding from both sides at a lower end portion of the body 121 of the ligation slide 120, may move in a complementary slipping motion for a smooth sliding operation. By way of such sliding operation, the ligation slide 120 can be closed, shutting off the open portion at the upper side of the slot 114, to thereby ligate the archwire (not shown).

When the ligation slide 120 undergoes a ligating and releasing operation, the retainer 140 installed on the lower surface of the body 121 can be set to a restraining and releasing state to form a locking and unlocking state by way of a complementary fastening/detaching action with the pin member 130 that protrudes to a particular height above the bottom surface of the slide part 113s of the bracket body 110. That is, when the ligation slide 120 is slid forward to perform a ligating operation, the pin member 130 may be pushed and inserted into and placed in the circular hole 141h in the disk part 141A of the retainer 140. Here, the shock-absorbing elastic ribs 141L can be elastically deformed towards the arced elongated holes 141t to absorb the impact that occurs during the ligating operation and relieve or alleviate the impact. This can effectively eliminate the pain transferred to the patient.

If the ligated state of the archwire inserted in the slot 114 is to be released while the ligation slide 120 is set in a closed state, the orthodontist may insert a tool or instrument in the tool receptacle 112a and gently rotate. By way of the pressing and pushing physical force thus provided, the tool or instrument may readily move the ligation slide 120 backward. As a result, the upper side of the slot 114 can be opened, so that the ligated state of the archwire may be easily released. For example, a tool or instrument such as a flat-blade screwdriver that has a front end portion formed in a linear shape can be gently rotated after its front end portion is inserted into the tool receptacle 112a. In this case, the torque provided by the linear front end portion may push the ligation slide 120 in reverse to open the upper side of the slot 114. In this way, the procedure can be made more convenient, as the ligated state of the archwire can be easily and readily released by a so-called one-touch method.

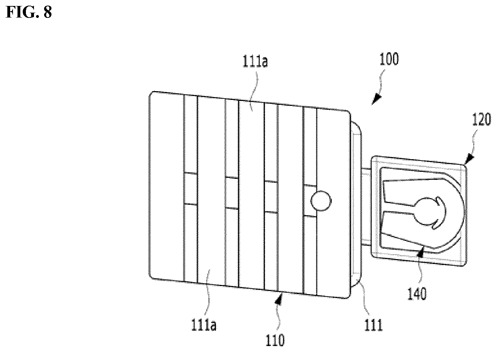

FIG. 7 and FIG. 8 are diagrams illustrating a self-ligating orthodontic bracket assembly according to another embodiment of the present invention.

With a self-ligating orthodontic bracket assembly according to another embodiment of the present invention, the bracket body 110 can be manufactured, for example, as a colored or dyed mold or a transparent or semitransparent mold via injection molding, etc., using a nonmetal material such as resin, plaster, or ceramic, etc.

The present invention is not limited to the specific preferred embodiments described above. A person having ordinary skill in the field of art to which the present invention pertains would be able to practice various modifications without departing from the essence of the present invention as set forth in the claims, and moreover, such modifications would be encompassed by the scope of claims.

## Claims

1. A self-ligating orthodontic bracket assembly (100) comprising:
a bracket body (110) having an attachment surface and a slot (114), the attachment surface configured to be adhered to a tooth surface, the slot having an open form to enable a placement of a wire along a teeth alignment direction;
a ligation slide (120) installed movably on the bracket body to enable a selective opening/closing operation of the slot (114); and
a binding part for restraining the ligation slide to prevent the ligation slide (120) from becoming detached from the bracket body (110),
wherein the binding part comprises a pin member (130) and a retainer (140), pin member (130) provided on the bracket body (110) to be arranged in a movement zone of the ligation slide, the retainer (140) provided on the ligation slide (120) in a manner enabling a complementary fastening/detaching action with the pin member (130),
a ligating and releasing operation is selectively achieved for the wire inserted in the slot by the complementary fastening/detaching action of the retainer (140) and the pin member (130) according to a movement of the ligation slide (120),
the retainer (140) is installed on a lower surface of the ligation slide (120) facing the bracket body (110),
the retainer is made with a flat spring element formed as a snap ring to enable the complementary fastening/detaching action while being elastically deformed by the pin member (130) according to a movement of the ligation slide (120),
and the retainer (140) comprises a disk part (141A), pair of floating plates (141B), and a pair of shock-absorbing elastic ribs (141L), the disk part (141A) having a circular hole (141h) formed in a body made of a flat elastic piece, the pair of floating plates (141B) protruding and extending from the disk part such that a slit hole (141S) continuing from an open one side of the circular hole (141h) has a shape of a keyseat, the pair of shock-absorbing elastic ribs (141L) each formed with an arced elongated hole formed as a recessed indentation connecting to the other side of the circular hole and with a vane protruding inward from a boundary portion between the circular hole and the arced elongated hole.

2. The self-ligating orthodontic bracket assembly of claim 1, wherein the bracket body comprises a base, a first upper body, and a second upper body, the base having a shape of a flat block such that the attachment surface configured to be adhered to a tooth surface forms a lower surface thereof, the first upper body and the second upper body each provided on the base in a shape of a protruding block such that the first upper body and the second upper body are divided into two sides with the slot positioned in-between,
the slot exposes a portion of an upper surface of the base to form a bottom surface and is surrounded by the first upper body and the second upper body such that opposing wall surfaces of the first upper body and the second upper body form inner walls, so that the slot forms a trough that is open at an upper portion and both ends thereof, to enable a coupling of the bracket body to a tooth by inserting and placing an archwire in the trough.

3. The self-ligating orthodontic bracket assembly of claim 2, wherein the base has an adhesive and a plurality of protrusions provided on the lower surface forming the attachment surface configured to be adhered to the tooth surface, the plurality of protrusions arranged in a particular pattern to increase bonding strength by increasing contact area.

4. The self-ligating orthodontic bracket assembly of claim 3, wherein the protrusions are formed in an undercut shape so as to restrain the adhesive filled therearound and prevent the adhesive from readily being removed.

5. The self-ligating orthodontic bracket assembly of claim 2, wherein the first upper body of the bracket body has a tool receptacle provided therein, the tool receptacle processed to a particular depth at an upper end of a wall surface forming an inner wall of the slot to form a recessed indentation of a tab shape.

6. The self-ligating orthodontic bracket assembly of claim 2, wherein the second upper body of the bracket body has a slide part and a pair of guide parts formed therein, the slide part forming a pathway configured to receive the ligation slide in a movable manner, the pair of guide parts facing each other and protruding to form side walls on both sides of the slide part.

7. The self-ligating orthodontic bracket assembly of claim 6, wherein the pair of guide parts have guide rails arranged in parallel in lower end portions of inner walls thereof, the guide rails processed in a groove shape to expand the slide part.

8. The self-ligating orthodontic bracket assembly of claim 6, wherein the slide part has a through-hole formed therein penetrating through the base and the second upper body, and the pin member is installed such that an upper end portion thereof protrudes up to a particular height above a bottom surface of the slide part when the pin member engages the through-hole by penetrating through the through-hole.

9. The self-ligating orthodontic bracket assembly of claim 2, wherein the first upper body and the second upper body of the bracket body have placement indentations formed along perimeters of lower end portions thereof adjacent to an upper end portion of the base and forming boundaries between the upper end portion of the base and the first upper body and the second upper body respectively, the placement indentations formed concavely in a groove shape to receive an elastic band placed therein in common.

10. The self-ligating orthodontic bracket assembly of claim 6, wherein the ligation slide comprises a body and a pair of sliding wings, the body configured to be complementarily joined with the slide part to be received in a movable state, the pair of sliding wings protruding outward from both sides of a lower end portion of the body,
and the sliding wings are complementarily joined with guide rails provided respectively on the pair of guide parts forming side walls on both sides of the slide part (113s) to be capable of movement by sliding.

11. The self-ligating orthodontic bracket assembly of claim 1, wherein the ligation slide comprises a press-fit indentation formed in a lower surface of a body thereof, the press-fit indentation configured to support the retainer fitted therein.

12. The self-ligating orthodontic bracket assembly of claim 1, wherein the bracket body is molded using any one material selected from nonmetal transparent materials and semitransparent materials.

## Patentansprüche

1. Selbstligierende kieferorthopädische Bracket-Anordnung (100), umfassend:
einen Bracket-Körper (110) mit einer Befestigungsfläche und einem Schlitz (114), wobei die Befestigungsfläche dazu eingerichtet ist, an einer Zahnoberfläche zu haften, wobei der Schlitz eine offene Form aufweist, um eine Platzierung eines Drahtes entlang einer Zahnausrichtungsrichtung zu ermöglichen;
einen Ligationsschlitten (120), der beweglich an dem Bracket-Körper angebracht ist, um einen selektiven Öffnungs-/Schließvorgang des Schlitzes (114) zu ermöglichen; und
einen Bindeteil zum Zurückhalten des Ligationsschlittens, um zu verhindern, dass sich der Ligationsschlitten (120) von dem Bracket-Körper (110) löst,
wobei der Bindeteil ein Stiftelement (130) und einen Halter (140) umfasst,
das Stiftelement (130), das an dem Bracket-Körper (110) vorgesehen ist, in einer Bewegungszone des Ligationsschlittens angeordnet sein soll,
der Halter (140) auf dem Ligationsschlitten (120) in einer Weise vorgesehen ist, die eine ergänzende Befestigungs-/Lösewirkung mit dem Stiftelement (130) ermöglicht,
ein Ligierungs- und Freigabevorgang selektiv für den in den Schlitz eingeführten Draht durch die komplementäre Befestigungs-/Lösewirkung des Halters (140) und des Stiftelements (130) gemäß einer Bewegung des Ligationsschlittens (120) erreicht wird,
der Halter (140) auf einer Unterseite des Ligationsschlittens (120), die dem Bracket-Körper (110) zugewandt ist, angebracht ist,
der Halter aus einem flachen Federelement besteht, das als Sprengring ausgebildet ist, um die komplementäre Befestigungs-/Lösewirkung zu ermöglichen, während er durch das Stiftelement (130) gemäß einer Bewegung des Ligationsschlittens (120) elastisch verformt wird,
und der Halter (140) einen Scheibenteil (141A), zwei gleitende Platten (141B) und zwei stoßdämpfende elastischer Rippen (141L) aufweist, wobei der Scheibenteil (141A) ein kreisförmiges Loch (141h) aufweist, das in einem Körper aus einem flachen elastischen Stück ausgebildet ist, wobei die beiden gleitenden Platten (141B) aus dem Scheibenteil herausragen und sich so erstrecken, dass ein Schlitzloch (141S), das von einer offenen Seite des kreisförmigen Lochs (141h) ausgeht, die Form eines Keilschlitzes hat,
wobei die beiden stoßdämpfenden elastischen Rippen (141L) jeweils mit einem bogenförmigen Langloch, das als ausgenommene Vertiefung ausgebildet und mit der anderen Seite des kreisförmigen Lochs verbunden ist, und mit einem Flügel ausgebildet ist, der von einem Grenzabschnitt zwischen dem kreisförmigen Loch und dem bogenförmigen Langloch nach innen ragt.

2. Selbstligierende kieferorthopädische Bracket-Anordnung nach Anspruch 1, bei der der Bracket-Körper eine Basis, einen ersten oberen Körper und einen zweiten oberen Körper umfasst, wobei die Basis die Form eines flachen Blocks aufweist, so dass die Befestigungsfläche, die dazu eingerichtet ist, an einer Zahnoberfläche anzuhaften, eine untere Oberfläche davon ausbildet, wobei der erste obere Körper und der zweite obere Körper jeweils auf der Basis in Form eines hervorstehenden Blocks vorgesehen sind, so dass der erste obere Körper und der zweite obere Körper in zwei Seiten geteilt sind, wobei der Schlitz dazwischen angeordnet ist, und
der Schlitz einen Abschnitt einer Oberseite der Basis freilegt, um eine Unterseite auszubilden, und von dem ersten oberen Körper und dem zweiten oberen Körper so umgeben ist, dass gegenüberliegende Wandflächen des ersten oberen Körpers und des zweiten oberen Körpers Innenwände ausbilden, so dass der Schlitz eine Mulde bildet, die an einem oberen Abschnitt und an beiden Enden davon offen ist, um eine Kopplung des Bracket-Körpers an einen Zahn durch Einführen und Platzieren eines Bogendrahtes in der Mulde zu ermöglichen.

3. Selbstligierende kieferorthopädische Bracket-Anordnung nach Anspruch 2, bei der die Basis einen Klebstoff und zahlreiche Vorsprünge aufweist, die auf der Unterseite vorgesehen sind und die Befestigungsfläche ausbilden, die zum Anhaften an der Zahnoberfläche eingerichtet ist, wobei die zahlreichen Vorsprünge in einem bestimmten Muster angeordnet sind, um die Klebkraft durch Vergrößerung der Kontaktfläche zu erhöhen.

4. Selbstligierende kieferorthopädische Bracket-Anordnung nach Anspruch 3, bei der die Vorsprünge in einer hinterschnittenen Form ausgebildet sind, um den dort herumgefüllten Klebstoff zurückzuhalten und zu verhindern, dass der Klebstoff leicht entfernt wird.

5. Selbstligierende kieferorthopädische Bracket-Anordnung nach Anspruch 2, bei der der erste obere Körper des Bracket-Körpers eine darin vorgesehenen Werkzeugaufnahme aufweist, wobei die Werkzeugaufnahme bis zu einer bestimmten Tiefe an einem oberen Ende einer Wandoberfläche ausgearbeitet ist, die eine Innenwand des Schlitzes ausbildet, um eine ausgenommene Vertiefung einer Laschenform auszubilden.

6. Selbstligierende kieferorthopädische Bracket-Anordnung nach Anspruch 2, bei der der zweite obere Körper des Bracket-Körpers einen Gleitteil und zwei darin ausgebildete Führungsteile aufweist, wobei der Gleitteil einen Weg ausbildet, der dazu eingerichtet ist, den Ligationsschlitten beweglich aufzunehmen, wobei die beiden Führungsteile einander zugewandt sind und von Seitenwänden auf beiden Seiten des Gleitteils hervorragen.

7. Selbstligierende kieferorthopädische Bracket-Anordnung nach Anspruch 6, bei der die beiden Führungsteile Führungsschienen aufweisen, die parallel in unteren Endabschnitten davon angeordnet sind, wobei die Führungsschienen in einer Rillenform ausgearbeitet sind, um den Gleitteil zu erweitern.

8. Selbstligierende kieferorthopädische Bracket-Anordnung nach Anspruch 6, bei der der Gleitteil ein darin ausgebildetes Durchgangsloch aufweist, das die Basis und den zweiten oberen Körper durchläuft, und das Stiftelement so angebracht ist, dass ein oberer Endabschnitt davon bis zu einer vorbestimmten Höhe über einer Bodenfläche des Gleitteils hervorsteht, wenn das Stiftelement in das Durchgangsloch eingreift, indem es das Durchgangsloch durchläuft.

9. Selbstligierende kieferorthopädische Bracket-Anordnung nach Anspruch 2, bei der der erste obere Körper und der zweite obere Körper des Bracket-Körpers Anordnungsvertiefungen aufweisen, die entlang Umfängen der unteren Endabschnitte davon neben einem oberen Endabschnitt der Basis ausgebildet sind und Grenzen zwischen dem oberen Endabschnitt der Basis und dem ersten oberen Körper bzw. dem zweiten oberen Körper ausbilden, wobei die Anordnungsvertiefungen konkav in einer Rillenform ausgebildet sind, um ein darin angeordnetes elastisches Band gemeinsam aufzunehmen.

10. Selbstligierende kieferorthopädische Bracket-Anordnung nach Anspruch 6, bei der der Ligationsschlitten einen Körper und zwei Gleitflügel umfasst, wobei der Körper dazu eingerichtet ist, komplementär mit dem Gleitteil verbunden zu werden, der in einem beweglichen Zustand aufgenommen werden soll, wobei die beiden Gleitflügel von beiden Seiten eines unteren Endabschnitts des Körpers nach außen ragen,
und die Gleitflügel komplementär mit Führungsschienen verbunden sind, die jeweils an den beiden Führungsteilen vorgesehen sind, die Seitenwände auf beiden Seiten des Gleitteils (113s) ausbilden, um sich durch Gleiten bewegen zu können.

11. Selbstligierende kieferorthopädische Bracket-Anordnung nach Anspruch 1, bei der der Ligationsschlitten eine Presspassungsvertiefung umfasst, die in einer Unterseite eines Körpers davon ausgebildet ist, wobei die Presspassungsvertiefung dazu eingerichtet ist, den darin angebrachten Halter zu unterstützen.

12. Selbstligierende kieferorthopädische Bracket-Anordnung nach Anspruch 1, bei der der Bracket-Körper unter Verwendung eines beliebigen Materials geformt ist, das aus transparenten Nichtmetall-Materialien und halbtransparenten Materialien ausgewählt ist.

## Revendications

1. Ensemble bracket orthodontique auto-ligaturant (100) comprenant :
un corps de bracket (110) ayant une surface de fixation et une fente (114), la surface de fixation étant configurée pour venir en adhérence avec une surface de dent, la fente ayant une forme ouverte pour permettre une mise en place d'un fil le long d'une direction d'alignement de dents ;
un coulisseau de ligature (120) installé de manière mobile sur le corps de bracket pour permettre une opération d'ouverture/fermeture sélective de la fente (114) ; et
une partie de liaison pour retenir le coulisseau de ligature afin d'empêcher le coulisseau de ligature (120) de se détacher du corps de bracket (110),
dans lequel la partie de liaison comprend un élément de broche (130) et un élément de retenue (140), l'élément de broche (130) prévu sur le corps de bracket (110) pour être agencé dans une zone de déplacement du coulisseau de ligature, l'élément de retenue (140) prévu sur le coulisseau de ligature (120) de manière à permettre une action de fixation/détachement complémentaire avec l'élément de broche (130),
une opération de ligature et de libération est réalisée sélectivement pour le fil inséré dans la fente par l'action de fixation/détachement complémentaire de l'élément de retenue (140) et de l'élément de broche (130) selon un déplacement du coulisseau de ligature (120),
l'élément de retenue (140) est installé sur une surface inférieure du coulisseau de ligature (120) faisant face au corps de bracket (110),
l'élément de retenue est réalisé avec un élément de ressort plat formé comme un anneau d'encliquetage pour permettre l'action de fixation/détachement complémentaire tout en étant déformé élastiquement par l'élément de broche (130) selon un mouvement du coulisseau de ligature (120),
et l'élément de retenue (140) comprend une portion de disque (141A), une paire de plaques flottantes (141B), et une paire de nervures élastiques absorbant les chocs (141L), la portion de disque (141A) ayant un trou circulaire (141h) formé dans un corps constitué d'une pièce élastique plate, la paire de plaques flottantes (141B) faisant saillie et s'étendant à partir de la portion de disque de telle sorte qu'un trou fendu (141S) se prolongeant à partir d'un côté ouvert du trou circulaire (141h) ait une forme de rainure de clavette, la paire de nervures élastiques absorbant les chocs (141L) formées chacune avec un trou allongé arqué formé comme une indentation en creux reliant l'autre côté du trou circulaire et avec une palette faisant saillie vers l'intérieur à partir d'une partie limite entre le trou circulaire et le trou allongé arqué.

2. Ensemble bracket orthodontique auto-ligaturant selon la revendication 1, dans lequel le corps de bracket comprend une base, un premier corps supérieur et un second corps supérieur, la base ayant une forme de bloc plat de telle sorte que la surface de fixation configurée pour être mise en adhérence sur une surface de dent forme une surface inférieure de celle-ci, le premier corps supérieur et le second corps supérieur étant chacun prévus sur la base en une forme de bloc faisant saillie de telle sorte que le premier corps supérieur et le second corps supérieur soient divisés en deux côtés avec la fente positionnée entre eux,
la fente expose une partie d'une surface supérieure de la base pour former une surface inférieure et est entourée par le premier corps supérieur et le second corps supérieur de telle sorte que des surfaces de paroi opposées du premier corps supérieur et du second corps supérieur forment des parois intérieures, de telle sorte que la fente forme une goulotte qui est ouverte au niveau d'une partie supérieure et des deux extrémités de celle-ci, pour permettre un couplage du corps de bracket à une dent en insérant et en plaçant un fil d'arc dans la goulotte.

3. Ensemble bracket orthodontique auto-ligaturant selon la revendication 2, dans lequel la base a un adhésif et une pluralité de saillies prévues sur la surface inférieure formant la surface de fixation configurées pour être mises en adhérence sur la surface de dent, la pluralité de saillies étant agencées selon un motif particulier pour augmenter la force de liaison en augmentant la surface de contact.

4. Ensemble bracket orthodontique auto-ligaturant selon la revendication 3, dans lequel les saillies sont formées en une forme en contre-dépouille de manière à retenir l'adhésif rempli autour de celles-ci et à empêcher l'adhésif d'être facilement retiré.

5. Ensemble c selon la revendication 2, dans lequel le premier corps supérieur du corps de bracket a un réceptacle d'outil prévu en son sein, le réceptacle d'outil étant traité à une profondeur particulière au niveau d'une extrémité supérieure d'une surface de paroi formant une paroi intérieure de la fente pour former une indentation en creux d'une forme de patte.

6. Ensemble bracket orthodontique auto-ligaturant selon la revendication 2, dans lequel le second corps supérieur du corps d'appareil a une partie de coulissement et une paire de parties de guidage formées en son sein, la partie de coulissement formant un trajet configuré pour recevoir le coulisseau de ligature d'une manière mobile, la paire de parties de guidage se faisant face mutuellement et faisant saillie pour former des parois latérales sur les deux côtés de la partie de coulissement.

7. Ensemble bracket orthodontique auto-ligaturant selon la revendication 6, dans lequel la paire de parties de guidage a des rails de guidage agencés en parallèle dans des parties d'extrémité inférieure de parois intérieures de celles-ci, les rails de guidage étant traités en une forme de rainure pour étendre la partie de coulissement.

8. Ensemble bracket orthodontique auto-ligaturant selon la revendication 6, dans lequel la partie de coulissement a un trou traversant formé en son sein, pénétrant à travers la base et le second corps supérieur, et l'élément de broche est installé de telle sorte qu'une partie d'extrémité supérieure de celui-ci fait saillie jusqu'à une hauteur particulière au-dessus d'une surface inférieure de la partie de coulissement lorsque l'élément de broche vient en prise avec le trou traversant en pénétrant à travers le trou traversant.

9. Ensemble bracket orthodontique auto-ligaturant selon la revendication 2, dans lequel le premier corps supérieur et le second corps supérieur du corps d'appareil ont des indentations de mise en place formées le long de périmètres de parties d'extrémité inférieure de ceux-ci adjacentes à une partie d'extrémité supérieure de la base et formant des limites entre la partie d'extrémité supérieure de la base et le premier corps supérieur et le second corps supérieur respectivement, les indentations de mise en place étant formées de manière concave en une forme de rainure pour recevoir une bande élastique placée dans celles-ci en commun.

10. Ensemble bracket orthodontique auto-ligaturant selon la revendication 6, dans lequel le coulisseau de ligature comprend un corps et une paire d'ailes coulissantes, le corps étant configuré pour être joint de manière complémentaire avec la partie de coulissement pour être reçu dans un état mobile, la paire d'ailes coulissantes faisant saillie vers l'extérieur depuis les deux côtés d'une partie d'extrémité inférieure du corps,
et les ailes coulissantes sont jointes de manière complémentaire à des rails de guidage prévus respectivement sur la paire de parties de guidage formant des parois latérales sur les deux côtés de la partie de coulissement (113s) pour pouvoir se déplacer par coulissement.

11. Ensemble bracket orthodontique auto-ligaturant selon la revendication 1, dans lequel le coulisseau de ligature comprend une indentation d'ajustement serré formée dans une surface inférieure d'un corps de celui-ci, l'indentation d'ajustement serré étant configurée pour supporter l'élément de retenue ajusté dans celle-ci.

12. Ensemble bracket orthodontique auto-ligaturant selon la revendication 1, dans lequel le corps d'appareil est moulé en utilisant un matériau quelconque choisi parmi des matériaux transparents non métalliques et des matériaux semi-transparents.
